# EUROPEAN PATENT SPECIFICATION

(11) **EP 2 811 399 B1**
(45) Date of publication and mention of the grant of the patent: **28.04.2021**
(21) Application number: 13812923.4
(22) Date of filing: 27.06.2013
(51) Int. Cl.: G06F 9/445

(54) **METHOD AND TERMINAL FOR STARTING MUSIC APPLICATION**
VERFAHREN UND ENDGERÄT ZUM STARTEN EINER MUSIKANWENDUNG
PROCÉDÉ ET TERMINAL POUR DÉMARRER UNE APPLICATION MUSICALE

(30) Priority: 02.07.2012 CN 201210225328
(43) Date of publication of application: 10.12.2014
(73) Proprietor: Huawei Device Co., Ltd., Dongguan, Guangdong 523808 (CN)
(72) Inventor: TU, Hongyan, Shenzhen Guangdong 518129 (CN); YUAN, Hao, Shenzhen Guangdong 518129 (CN)
(74) Representative: Goddar, Heinz J.
(86) International application number: PCT/CN2013/078088
(87) International publication number: WO 2014/005493

(56) References cited:
- CN-A- 101 075 187
- CN-A- 101 957 716
- CN-A- 102 306 101
- CN-A- 102 737 690
- JP-A- 2008 067 077
- JP-A- 2008 067 077
- US-A1- 2007 281 627

## Description

### TECHNICAL FIELD

The present invention relates to the field of terminal technologies, and in particular, to a method for starting a music application and a terminal.

### BACKGROUND

On a terminal device in the prior art, if a user wants to use an application of a non-music type while listening to music, the user needs to first start a music client, choose to play music, minimize the music client, return to a standby screen, and start another application client. In addition, if the user wants to play different music while using different non-music types of applications, the user needs to perform the foregoing operation steps each time before the user starts these non-music applications, so that repeated and trivial operation steps are required when the user wants to use an application of a non-music type while listening to music, which affects user experience.
Document JP 2008 067077 A discloses a portable terminal e.g. mobile phone which reproduces stored music corresponding to started application, or reproduces an audio file in response to receiving an email, thus providing an alarm to notify the user, without need for additional operations by the user. Document US 2007/281627 A1 discloses a media-assisted application for a computing device, wherein a plurality of audio files associated with said application are stored in said computing device, and wherein said audio files are configured to be output when particular events related to said application occur, for example when said application is launched.

### SUMMARY

Embodiments of the present invention provide a method for starting a music application and a terminal, which reduces trivial and complex user operations.

To achieve the foregoing purpose, the following technical solutions are adopted in the embodiments of the present invention:

A method for starting a music application is provided, including:
when a non-music application is started, performing a search in an audio association information list according to identifier information of the started non-music application, where the audio association information list refers to a list of a correspondence between an application and an audio file; and
when the audio association information list includes an audio file corresponding to the started non-music application, starting a music application in the background to play the audio file corresponding to the started non-music application; when the music application is started in the background, execution of the non-music application being started is displayed in the foreground;
receiving an audio association editing request sent by a user using a preset key;
displaying the audio association information list;
receiving edited audio association information entered by the user and replacing the audio association information with the edited audio association information.

A terminal, including:
a searching unit, configured to, when a non-music application is started, perform a search in an audio association information list according to identifier information of the started non-music application, where the audio association information list refers to a list of a correspondence between an application and an audio file; and
a playback starting unit, configured to, when the searching unit detects that the audio association information list includes an audio file corresponding to the started non-music application, start a music application in the background to play the audio file corresponding to the started application; when the music application is started in the background, execution of the non-music application being started is displayed in the foreground;
wherein the terminal is further configured to:
   receive an audio association editing request sent by a user using a preset key;
   display the audio association information list;
   receive edited audio association information entered by the user and replace the audio association information with the edited audio association information.

According to a method for starting a music application and a terminal provided in the embodiments of the present invention, when an application is started, an audio file corresponding to the application is searched and after being found, the found audio file is played, so that a user avoids trivial operations of starting a music client first, choosing to play music, then minimizing the music client, returning to a home screen, and finally starting another application client when the user wants to use an application while listening to music. This simplifies operation steps and improves user experience.

### BRIEF DESCRIPTION OF DRAWINGS

To describe the technical solutions in the embodiments of the present invention more clearly, the following briefly introduces accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a method for starting a music application according to Embodiment 1 of the present invention;
FIG. 2 is a flowchart of a method for starting a music application according to Embodiment 2 of the present invention;
FIG. 3 is a flowchart of a method for generating an audio association information list according to Embodiment 2 of the present invention;
FIG. 4 is a flowchart of a method for modifying an audio association information list according to Embodiment 2 of the present invention;
FIG. 5 is a composition block diagram of a terminal according to Embodiment 3 of the present invention;
FIG. 6 is a composition block diagram of another terminal according to Embodiment 3 of the present invention;
FIG. 7 is a composition block diagram of another terminal according to Embodiment 3 of the present invention;
FIG. 8 is a composition block diagram of another terminal according to Embodiment 3 of the present invention;
FIG. 9 is a composition block diagram of another terminal according to Embodiment 3 of the present invention; and
FIG. 10 is a composition block diagram of a terminal according to Embodiment 4 of the present invention.

### DESCRIPTION OF EMBODIMENTS

The technical solutions in the embodiments of the present invention are clearly and completely described as follows with reference to accompanying drawings in the embodiments of the present invention. Apparently, the described embodiments are merely a part rather than all of the embodiments of the present invention. All other embodiments by a person of ordinary skill in the art based on the embodiments of the present invention without creative efforts shall fall within the protection scope of the present invention.

### Embodiment 1

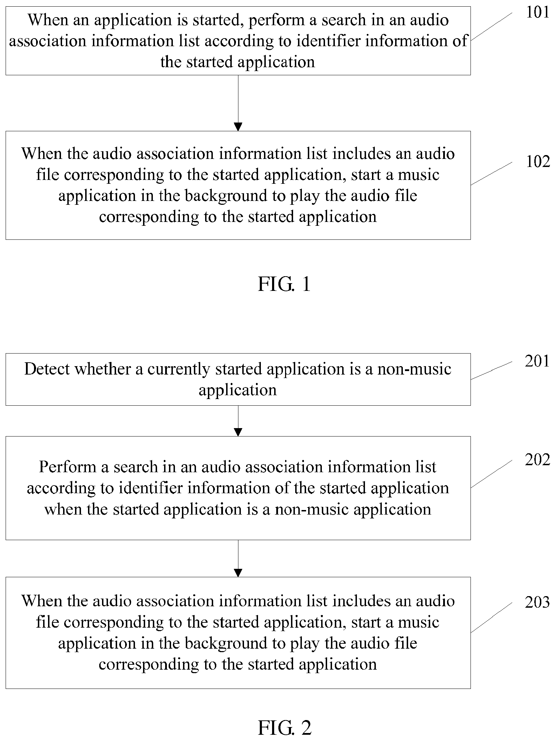

An embodiment of the present invention provides a method for starting a music application. The method may be applied to user equipments including mobile phones, tablet computers, and personal computers. As shown in FIG. 1, the method includes the following steps:

101: When an application is started, perform a search in an audio association information list according to identifier information of the started application.

The application may include a browser, a game, and the like.

Identifier information of a non-music application may be information that provides an identification function, such as a numeric sequence number.

An audio file may be a file in audio format that may be implemented in the prior art, such as a music file and a voice file.

The audio association information list includes a correspondence between an application and an audio file and may be presented as an application corresponding to an audio file or may also be presented as an application corresponding to an audio playlist, where the playlist includes multiple audio files, that is, a non-music application corresponding to multiple audio files.

102: When the audio association information list includes an audio file corresponding to the started application, start a music application in the background to play the audio file corresponding to the started application.

It should be noted that, when the music application is started in the background, execution progress of the application being started in the system is displayed in the foreground.

In addition, when the audio association information list does not include an audio file corresponding to the started application, execution progress of the application being started in the system is displayed in the foreground, but no music application is started in the background.

In a method provided by this embodiment of the present invention, when an application is started, an audio file corresponding to the application is searched and after being found, the found audio file is played, so that a user avoids trivial operations of starting a music client first, choosing to play music, then minimizing the music client, returning to a home screen, and finally starting another application client when the user wants to use an application while listening to music. This simplifies operation steps and improves user experience.

### Embodiment 2

An embodiment of the present invention provides a method for starting a music application, as shown in FIG. 2, including:
201: Detect whether a currently started application is a non-music application.
202: Perform a search in an audio association information list according to identifier information of the started application when the currently started application is a non-music application.

An implementation method for the detecting whether a currently started application is a non-music application may be: starting a timer when a user equipment is started, and detecting whether a non-music application is being started in a system by continuous polling in each clock of the timer; or determining whether a new application is running by monitoring currently running application processes in the system, thereby determining whether there is a new application being started.

It should be noted that, if no non-music application being started is detected, step 201 is performed again.

203: When the audio association information list includes an audio file corresponding to the started application, start a music application in the background to play the audio file corresponding to the started application.

An implementation method for the starting a music application in the background to play the audio file corresponding to the started application may be: starting, in the background, a music client, for example, a music player, on a user terminal to play the audio file corresponding to the started application.

It should be noted that, if no audio file corresponding to the non-music application is found, only the non-music application is started in the foreground.

According to a method for starting a music application provided in this embodiment of the present invention, when an application is started, an audio file corresponding to the application is searched and after being found, the found audio file is played, so that a user avoids trivial operations of starting a music client first, choosing to play music, then minimizing the music client, returning to a home screen, and finally starting another application client when the user wants to use an application while listening to music. This simplifies operation steps and improves user experience.

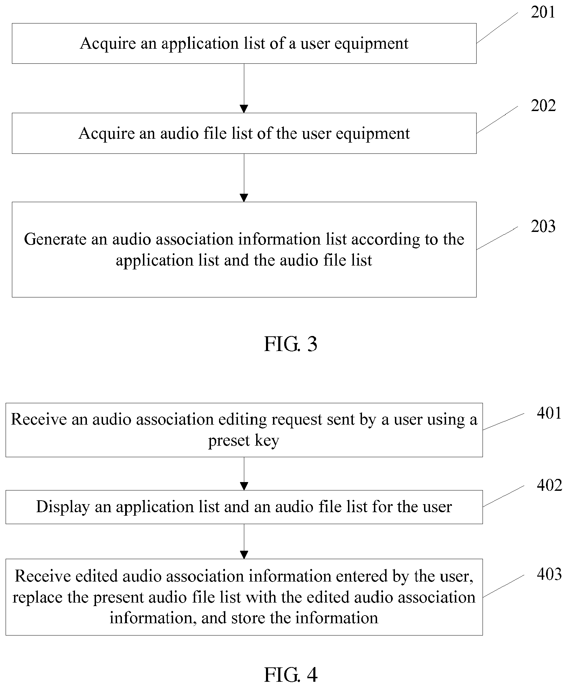

Further, to implement a function of playing different music according to features and application scenarios of various clients and thereby adapting to various application scenarios and improving user experience, the method for starting an application according to the embodiment of the present invention, as shown in FIG. 3, including:

301: Acquire an application list of a user equipment, where the application list includes an application name and identifier information of a non-music application on the user equipment.

An implementation method for the acquiring an application list of a user equipment includes:
acquiring a non-music application of the user equipment and generating the application list according to the non-music application.

The non-music application of the user equipment may be acquired by traversing files in positions in which applications may be installed, such as a file system or an SD card (Secure Digital Memory Card, secure digital memory card) on the user equipment.

The identifier information corresponding to the application name may be information, such as a numeric sequence number, that provides an identification function. The method for generating identifier information may be: sorting an application name by information such as name initial or Pinyin initial, and successively adding identifier information, such as a numeric sequence number, to the sorted application name.

The foregoing application list may be presented by using the form described in the following Table 1.

**Table 1 Application list**

| **Sequence number** | **Application name** |
|---|---|
| 1 | Browser |
| 2 | Game |
| 3 | Picture browsing |

Of course, the content described in Table 1 is only an example, and specific content is not limited in this embodiment of the present invention.

302: Acquire an audio file list of the user equipment, where the audio file list includes a file name and identifier information of an audio file on the user equipment.

The acquiring an audio file list of the user equipment may be implemented by using the following two methods, specifically including:

Method 1: Search all files on the user equipment for an audio file; if audio files are found, acquire all the found audio files and generate the audio file list according to all the found audio files.

In Method 1, an implementation method for searching all files on the user equipment for an audio file may be: traversing files in positions in which audio files may be stored, such as a file system or an SD card on the user equipment, and adding the found audio files to the audio file list one by one.

Method 2: Receive an audio file list entered by a user.

In Method 2, the received audio file list entered by the user is configured by the user, where the audio file list may include all audio files on the user equipment or only some audio files selected by the user.

It should be noted that, in Method 2, if the user classifies audio files on the user equipment, for example, the user classifies music files by using the classification method of domestic and foreign or other classification methods and names the music files foreign music and domestic music, then the names of the audio files in the audio file list may be recorded as foreign music and domestic music.

The foregoing audio file list may be presented by using the form described in the following Table 2.

**Table 2 Audio file list**

| **Sequence number** | **Audio file name** |
|---|---|
| 1 | Domestic |
| 2 | Foreign |
| 3 | Audio file 1 |

Certainly, the content described in Table 2 is only an example, and specific content is not limited in this embodiment of the present invention.

303: Generate the audio association information list according to the application list and the audio file list, where the audio association information list includes a correspondence between the non-music application and the audio file. The correspondence may be presented by using a numeric sequence number of the non-music application and a numeric sequence number of the audio file, as described in Table 3.

**Table 3 Audio association information**

| **Application sequence number** | **Audio file sequence number** |
|---|---|
| 1 | 1,2,3 |
| 2 | 2,4,6 |
| 3 | 1, 3, 5, 7 |

Certainly, the content described in Table 3 is only an example, and specific content is not limited in this embodiment of the present invention.

It should be noted that, the foregoing steps 301 to 303 describe a method of automatically generating the audio association information list by a system on the user equipment. In this embodiment of the present invention, a correspondence that is between an application and an audio file and entered by a user may also be received to generate an audio association information list.

Further, there are some applications that provide a function of playing various types of music, such as background music, during the use of the applications, and user experience is affected if associated music in a music association information list is played at the same time. Therefore, after a correspondence that is between an application and an audio file and entered by the user is received, whether a correspondence between a music application and an audio file exists in the received correspondence that is between an application and an audio file and entered by the user is detected before the audio association information list is generated; when it is detected that the correspondence between a music application and an audio file exists in the received correspondence that is between an application and an audio file and entered by the user, the correspondence between a music application and an audio file is deleted from the received correspondence that is between an application and an audio file and entered by the user, and the audio association information list is generated according to the remaining correspondence between an application and an audio file; and when it is detected that no correspondence between a music application and an audio file exists in the received correspondence that is between an application and an audio file and entered by the user, the audio association information list is generated according to the received correspondence that is between an application and an audio file and entered by the user.

In this embodiment, a user may match various applications with various audio files and set audio association information as the user likes, so as to meet personal needs of the user and improve user experience.

Further, to help the user perform operations including adding and deleting on music being played when the user uses a non-music application, this embodiment of the present invention provides a method for modifying an audio association information list. As shown in FIG. 4, the method includes:
401: Receive an audio association editing request sent by a user using a preset key.

The preset key may be a physical key on the user equipment or a virtual key provided by the operating system of the user equipment, which is not limited in this embodiment of the present invention.

The audio association editing request may be directly sent by the user by using a customized hardware key or directly sent by using a function key provided by the operating system, so that the user may directly switch to an audio association information editing page when using a non-music application.

402: Display the application list and audio file list for the user, so that the user can edit the current audio association information list according to the application list and the audio file list.

403: Receive edited audio association information entered by the user, replace the current audio file list with the edited audio association information, and store the information.

In this embodiment of the present invention, when using a non-music application, a user may use a preset key to acquire an application list and an audio file list and edit a current audio association information list, which simplifies the user's editing of information about the audio file that is currently being played.

According to a method for starting a music application provided in this embodiment of the present invention, when an application is started, an audio file corresponding to the application is searched and after being found, the found audio file is played, so that a user avoids trivial operations of starting a music client first, choosing to play music, then minimizing the music client, returning to a home screen, and finally starting another application client when the user wants to use an application while listening to music. This simplifies operation steps and improves user experience.

In addition, the user may match various applications with various audio files and set audio association information as the user likes, so as to meet personal needs of the user and improve user experience.

### Embodiment 3

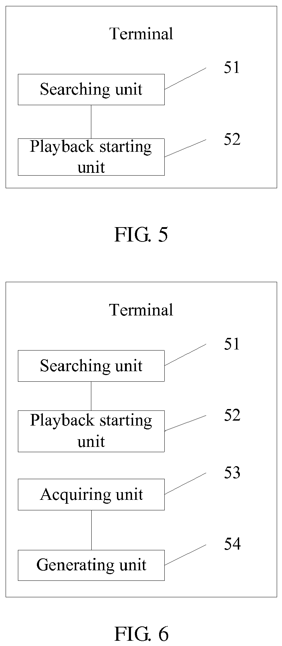

An embodiment of the present invention provides a terminal, which is used to start a music application. As shown in FIG. 5, the terminal includes a searching unit 51 and a playback starting unit 52.

The searching unit 51 is configured to, when an application is started, perform a search in an audio association information list according to identifier information of the started application, where the audio association information list refers to a list of a correspondence between an application and an audio file.

The playback starting unit 52 is configured to, when the searching unit 51 detects that the audio association information list includes an audio file corresponding to the started application, start a music application in the background to play the audio file corresponding to the started application.

Optionally, as shown in FIG. 6, the terminal further includes: an acquiring unit 53 and a generating unit 54.

The acquiring unit 53 is configured to acquire an application list of a user equipment, where the application list includes an application name and identifier information of a non-music application on the user equipment.

The acquiring unit 53 is further configured to acquire an audio file list of the user equipment, where the audio file list includes a file name and identifier information of an audio file on the user equipment.

The generating unit 54 is configured to generate the audio association information list according to the application list and audio file list that are acquired by the acquiring unit 53.

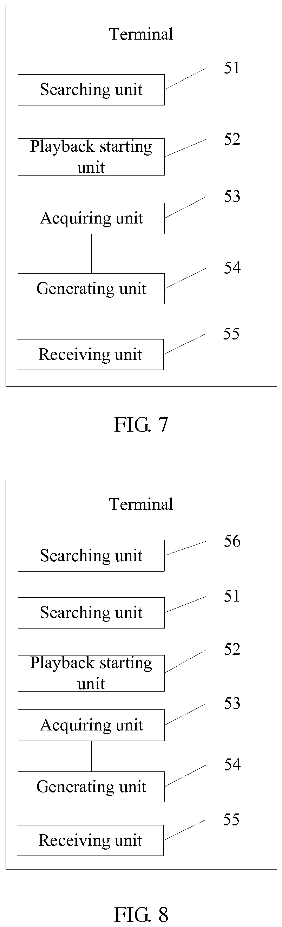

Optionally, as shown in FIG. 7, the terminal further includes a receiving unit 55.

The receiving unit 55 is configured to receive a correspondence that is between an application and an audio file and entered by a user, and generate the audio association information list.

Optionally, as shown in FIG. 8, the terminal further includes a detecting unit 56.

The detecting unit 56 is configured to detect whether the currently started application is a non-music application.

The searching unit 51 is configured to, when the currently started application is a non-music application, perform the search in the audio association information list according to the identifier information of the started application.

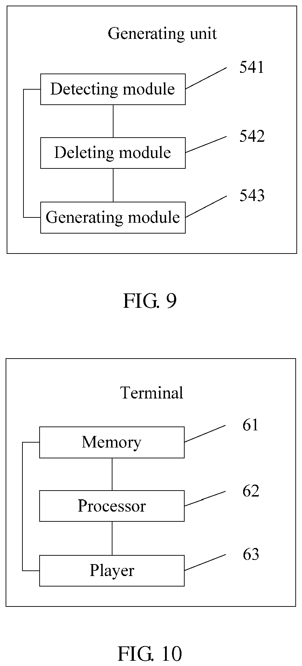

Optionally, as shown in FIG. 9, the generating unit 54 further includes a detecting module 541, a deleting module 542, and a generating module 543.

The detecting module 541 is configured to detect whether a correspondence between a music application and an audio file exists in the received correspondence that is between an application and an audio file and entered by the user.

The deleting module 542 is configured to, when the detecting module 541 detects that a correspondence between a music application and an audio file exists in the received correspondence that is between an application and an audio file and entered by the user, delete the correspondence between a music application and an audio file from the received correspondence that is between an application and an audio file and entered by the user.

The generating module 543 is configured to generate the audio association information list according to the remaining correspondence that is between an application and an audio file and generated by the deleting module 542.

The generating module 543 is further configured to, when the detecting module 541 detects that no correspondence between a music application and an audio file exists in the received correspondence that is between an application and an audio file and entered by the user, generate the audio association information list according to the received correspondence that is between an application and an audio file and entered by the user.

According to a terminal provided in this embodiment of the present invention, when an application is started, an audio file corresponding to the application is searched and after being found, the found audio file is played, so that a user avoids trivial operations of starting a music client first, choosing to play music, then minimizing the music client, returning to a home screen, and finally starting another application client when the user wants to use an application while listening to music. This simplifies operation steps and improves user experience.

In addition, the user may match various applications with various audio files and set audio association information as the user likes, so as to meet personal needs of the user and improve user experience.

Further, when using a non-music application, the user may use a preset key to acquire an application list and an audio file list and edit a current audio association information list, which simplifies the user's editing of information about the audio file that is currently being played.

### Embodiment 4

An embodiment of the present invention provides a terminal, which is used to start a music application. As shown in FIG. 10, the terminal includes a processor 61, a memory 62, and a player 63.

The processor 61 is configured to: when an application is started, perform a search in an audio association information list according to identifier information of the started application, where the audio association information list refers to a list of a correspondence between an application and an audio file; and when it is found that the audio association information list includes an audio file corresponding to the started application, start a music application in the background to play the audio file corresponding to the started application.

The memory 62 is configured to store an audio association information list and an audio file.

The player 63 is configured to play the audio file corresponding to the started application.

Optionally, the processor 61 is further configured to: acquire an application list of a user equipment, where the application list includes an application name and identifier information of a non-music application on the user equipment; acquire an audio file list of the user equipment, where the audio file list includes an audio file name and identifier information of an audio file on the user equipment; and generate the audio association information list according to the application list and audio file list acquired by the acquiring unit.

The memory 62 is configured to store the application list of the user equipment, and the audio file list of the user equipment.

Optionally, the processor 61 is further configured to receive a correspondence that is between an application and an audio file and entered by a user, and generate the audio association information list.

The memory 62 is further configured to store the correspondence that is between an application and an audio file and entered by the user.

Optionally, the processor 61 is further configured to: detect whether the currently started application is a non-music application; and when the currently started application is a non-music application, perform the search in the audio association information list according to the identifier information of the started application.

Optionally, the processor 61 is further configured to: detect whether a correspondence between a music application and an audio file exists in the received correspondence that is between an application and an audio file and entered by the user; if it is detected that a correspondence between a music application and an audio file exists in the received correspondence that is between an application and an audio file and entered by the user, delete the correspondence between a music application and an audio file from the received correspondence that is between an application and an audio file and entered by a user, and generate the audio association information list according to the remaining correspondence between an application and an audio file; and if no correspondence between a music application and an audio file exists in the received correspondence that is between an application and an audio file and entered by the user, generate the audio association information list according to the received correspondence that is between an application and an audio file and entered by the user.

According to a terminal provided in this embodiment of the present invention, when an application is started, an audio file corresponding to the application is searched and after being found, the found audio file is played, so that a user avoids trivial operations of starting a music client first, choosing to play music, then minimizing the music client, returning to a home screen, and finally starting another application client when the user wants to use an application while listening to music. This simplifies operation steps and improves user experience.

In addition, the user may match various applications with various audio files and set audio association information as the user likes, so as to meet personal needs of the user and improve user experience.

Further, when using a non-music application, the user may use a preset key to acquire an application list and an audio file list and edit a current audio association information list, which simplifies the user's editing of information about the audio file that is currently being played.

Based on the foregoing descriptions of the implementation manners, a person skilled in the art may clearly understand that the present invention may be implemented by software in addition to a necessary universal hardware or by hardware only. In most circumstances, the former is a preferred implementation manner. Based on such an understanding, the technical solutions of the present invention essentially or the part contributing to the prior art may be implemented in a form of a software product. The software product is stored in a readable storage medium, such as a floppy disk, a hard disk or an optical disc of a computer, and includes several instructions for instructing a computer device (which may be a personal computer, a server, or a network device) to perform the methods described in the embodiments of the present invention.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for starting a music application, comprising:
when a non-music application is started, performing (101) a search in an audio association information list according to identifier information of the started non-music application,
the audio association information list refers to a list of a correspondence between an application and an audio file;
**characterized in that**
when the audio association information list comprises an audio file corresponding to the started non-music application, starting a music application in the background to play the audio file corresponding to the started non-music application; when the music application is started in the background, execution of the non-music application being started is displayed in the foreground;
receiving (401) an audio association editing request sent by a user using a preset key;
displaying (402) the audio association information list;
receiving (403) edited audio association information entered by the user and replacing the audio association information with the edited audio association information.

2. The method according to claim 1, wherein before a non-music application is started, the method further comprises:
acquiring (201) an application list of a user equipment, wherein the application list comprises an application name and identifier information of a non-music application on the user equipment;
acquiring (202) an audio file list of the user equipment, wherein the audio file list comprises a file name and identifier information of an audio file on the user equipment; and
generating (203) the audio association information list according to the application list and the audio file list.

3. The method according to claim 1, wherein before a non-music application is started, the method further comprises:
receiving a correspondence that is between an application and an audio file and entered by a user, and generating the audio association information list.

4. The method according to any one of claims 1 to 3, wherein after the non-music application is started and before the performing a search in an audio association information list according to identifier information of the started non-music application, the method further comprises:
detecting whether the currently started application is a non-music application; and
performing the search in the audio association information list according to the identifier information of the started non-music application when the currently started application is a non-music application.

5. The method according to claim 3, wherein the generating the audio association information list comprises:
detecting whether a correspondence between a music application and an audio file exists in the received correspondence that is between an application and an audio file and entered by the user;
if it is detected that a correspondence between a music application and an audio file exists in the received correspondence that is between an application and an audio file and entered by the user, deleting the correspondence between a music application and an audio file from the received correspondence that is between an application and an audio file and entered by the user, and generating the audio association information list according to the remaining correspondence between an application and an audio file; and
if no correspondence between a music application and an audio file exists in the received correspondence that is between an application and an audio file and entered by the user, generating the audio association information list according to the received correspondence that is between an application and an audio file and entered by the user.

6. A terminal, comprising:
a searching unit (51), configured to, when a non-music application is started, perform a search in an audio association information list according to identifier information of the started non-music application,
the audio association information list referring to a list of a correspondence between an application and an audio file; and
**characterized by**
a playback starting unit (52), configured to, when the searching unit detects that the audio association information list comprises an audio file corresponding to the started non-music application, start a music application in the background to play the audio file corresponding to the started non-music application; when the music application is started in the background, execution of the non-music application being started is displayed in the foreground;
wherein the terminal is further configured to:
receive (401) an audio association editing request sent by a user using a preset key;
display (402) the audio association information list;
receive (403) edited audio association information entered by the user and replace the audio association information with the edited audio association information.

7. The terminal according to claim 6, further comprising:
an acquiring unit, configured to acquire an application list of a user equipment, wherein the application list comprises an application name and identifier information of a non-music application on the user equipment;
wherein the acquiring unit is further configured to acquire an audio file list of the user equipment, wherein the audio file list comprises a file name and identifier information of an audio file on the user equipment; and
a generating unit, configured to generate the audio association information list according to the application list and audio file list that are acquired by the acquiring unit.

8. The terminal according to claim 6, further comprising:
a receiving unit, configured to receive a correspondence that is between an application and an audio file and entered by a user, and generate the audio association information list.

9. The terminal according to any one of claims 6 to 8, further comprising:
a detecting unit, configured to detect whether the currently started application is a non-music application;
wherein the searching unit is configured to, when the currently started application is a non-music application, perform the search in the audio association information list according to the identifier information of the started non-music application.

10. The terminal according to claim 8, wherein the generating unit further comprises:
a detecting module, configured to detect whether a correspondence between a music application and an audio file exists in the received correspondence that is between an application and an audio file and entered by the user;
a deleting module, configured to: when the detecting module detects that a correspondence between a music application and an audio file exists in the received correspondence that is between an application and an audio file and entered by the user, delete the correspondence between a music application and an audio file from the received correspondence that is between an application and an audio file and entered by the user; and
a generating module, configured to generate the audio association information list according to the remaining correspondence that is between an application and an audio file and generated by the deleting module;
wherein the generating module is further configured to, when the detecting module detects that no correspondence between a music application and an audio file exists in the received correspondence that is between an application and an audio file and entered by the user, generate the audio association information list according to the received correspondence that is between an application and an audio file and entered by the user.

## Patentansprüche

1. Verfahren zum Starten einer Musikanwendung, das Folgendes umfasst:
wenn eine Nicht-Musikanwendung gestartet wird, Ausführen (101) einer Suche in einer Audiozuordnungsinformationsliste gemäß Bezeichnerinformationen der gestarteten Nicht-Musikanwendung,
wobei sich die Audiozuordnungsinformationsliste auf eine Liste einer Entsprechung zwischen einer Anwendung und einer Audiodatei bezieht;
**dadurch gekennzeichnet, dass**
dann, wenn die Audiozuordnungsinformationsliste eine Audiodatei, die der gestarteten Nicht-Musikanwendung entspricht, umfasst, eine Musikanwendung im Hintergrund gestartet wird, um die Audiodatei, die der gestarteten Nicht-Musikanwendung entspricht, abzuspielen; dann, wenn die Musikanwendung im Hintergrund gestartet ist, die Ausführung der Nicht-Musikanwendung, die gestartet wird, im Vordergrund angezeigt wird;
eine Audiozuordnungseditieranforderung, die durch einen Anwender unter Verwendung eines voreingestellten Schlüssels gesendet wird, empfangen wird (401);
die Audiozuordnungsinformationsliste angezeigt wird (402);
(403) editierte Audiozuordnungsinformationen, die durch den Anwender eingegeben werden, empfangen werden und die Audiozuordnungsinformationen durch die editierten Audiozuordnungsinformationen ersetzt werden.

2. Verfahren nach Anspruch 1, wobei das Verfahren vor dem Starten einer Nicht-Musikanwendung ferner Folgendes umfasst:
Erfassen (201) einer Anwendungsliste eines Anwendergeräts, wobei die Anwendungsliste einen Anwendungsnamen und Bezeichnerinformationen einer Nicht-Musikanwendung auf dem Anwendergerät umfasst;
Erfassen (202) einer Audiodateiliste des Anwendergeräts, wobei die Audiodateiliste einen Dateinamen und Bezeichnerinformationen einer Audiodatei auf dem Anwendergerät umfasst; und
Erzeugen (203) der Audiozuordnungsinformationsliste gemäß der Anwendungsliste und der Audiodateiliste.

3. Verfahren nach Anspruch 1, wobei das Verfahren vor dem Starten einer Nicht-Musikanwendung ferner Folgendes umfasst:
Empfangen einer Entsprechung, die zwischen einer Anwendung und einer Audiodatei besteht und durch einen Anwender eingegeben wird, und Erzeugen der Audiozuordnungsinformationsliste.

4. Verfahren nach einem der Ansprüche 1 bis 3, wobei das Verfahren nach dem Starten einer Nicht-Musikanwendung und vor dem Ausführen einer Suche in einer Audiozuordnungsinformationsliste gemäß den Bezeichnerinformationen der gestarteten Nicht-Musikanwendung ferner Folgendes umfasst:
Detektieren, ob die derzeit gestartete Anwendung eine Nicht-Musikanwendung ist; und
Ausführen der Suche in der Audiozuordnungsinformationsliste gemäß den Bezeichnerinformationen der gestarteten Nicht-Musikanwendung, wenn die derzeit gestartete Anwendung eine Nicht-Musikanwendung ist.

5. Verfahren nach Anspruch 3, wobei das Erzeugen der Audiozuordnungsinformationsliste Folgendes umfasst:
Detektieren, ob eine Entsprechung zwischen einer Musikanwendung und einer Audiodatei in der empfangenen Entsprechung, die zwischen einer Anwendung und einer Audiodatei besteht und durch den Anwender eingegeben wird, vorhanden ist;
falls detektiert wird, dass eine Entsprechung zwischen einer Musikanwendung und einer Audiodatei in der empfangenen Entsprechung, die zwischen einer Anwendung und einer Audiodatei ist und durch den Anwender eingegeben ist, vorhanden ist, Löschen der Entsprechung zwischen einer Musikanwendung und einer Audiodatei aus der empfangenen Entsprechung, die zwischen einer Anwendung und einer Audiodatei besteht und durch den Anwender eingegeben wird, und Erzeugen der Audiozuordnungsinformationsliste gemäß der verbleibenden Entsprechung zwischen einer Anwendung und einer Audiodatei; und
falls keine Entsprechung zwischen einer Musikanwendung und einer Audiodatei in der empfangenen Entsprechung, die zwischen einer Anwendung und einer Audiodatei besteht und durch den Anwender eingegeben wird, vorhanden ist, Erzeugen der Audiozuordnungsinformationsliste gemäß der empfangenen Entsprechung, die zwischen einer Anwendung und der Audiodatei besteht und durch den Anwender eingegeben wird.

6. Endgerät, das Folgendes umfasst:
eine Sucheinheit (51), die konfiguriert ist, dann, wenn eine Nicht-Musikanwendung gestartet wird, eine Suche in einer Audiozuordnungsinformationsliste gemäß Bezeichnerinformationen der gestarteten Nicht-Musikanwendung auszuführen,
wobei sich die Audiozuordnungsinformationsliste auf eine Liste einer Entsprechung zwischen einer Anwendung und einer Audiodatei bezieht; und
**gekennzeichnet durch**
eine Wiedergabestarteinheit (52), die konfiguriert ist, dann, wenn die Sucheinheit detektiert, dass die Audiozuordnungsinformationsliste eine Audiodatei, die der gestarteten Nicht-Musikanwendung entspricht, umfasst, eine Musikanwendung im Hintergrund zu starten, um die Audiodatei, die der gestarteten Nicht-Musikanwendung entspricht, abzuspielen; und dann, wenn die Musikanwendung im Hintergrund gestartet wird, Anzeigen der Ausführung der Nicht-Musikanwendung, die gestartet wird, im Vordergrund;
wobei das Endgerät ferner konfiguriert ist zum:
Empfangen (401) einer Audiozuordnungseditieranforderung, die durch einen Anwender unter Verwendung eines voreingestellten Schlüssels gesendet wird;
Anzeigen (402) der Audiozuordnungsinformationsliste;
Empfangen (403) editierter Audiozuordnungsinformationen, die durch den Anwender eingegeben werden, und Ersetzen der Audiozuordnungsinformationen durch die editierten Audiozuordnungsinformationen.

7. Endgerät nach Anspruch 6, das ferner Folgendes umfasst:
eine Erfassungseinheit, die konfiguriert ist, eine Anwendungsliste eines Anwendergeräts zu erfassen, wobei die Anwendungsliste einen Anwendungsnamen und Bezeichnerinformationen einer Nicht-Musikanwendung auf dem Anwendergerät umfasst;
wobei die Erfassungseinheit ferner konfiguriert ist, eine Audiodateiliste des Anwendergeräts zu erfassen, wobei die Audiodateiliste einen Dateinamen und Bezeichnerinformationen einer Audiodatei auf dem Anwendergerät umfasst; und
eine Erzeugungseinheit, die konfiguriert ist, die Audiozuordnungsinformationsliste gemäß der Anwendungsliste und der Audiodateiliste, die durch die Erfassungseinheit erfasst sind, zu erzeugen.

8. Endgerät nach Anspruch 6, das ferner Folgendes umfasst:
eine Empfangseinheit, die konfiguriert ist, eine Entsprechung, die zwischen einer Anwendung und einer Audiodatei ist und durch einen Anwender eingegeben ist, zu empfangen und die Audiozuordnungsinformationsliste zu erzeugen.

9. Endgerät nach einem der Ansprüche 6 bis 8, das ferner Folgendes umfasst:
eine Detektionseinheit, die konfiguriert ist zu detektieren, ob die derzeit gestartete Anwendung eine Nicht-Musikanwendung ist;
wobei die Sucheinheit konfiguriert ist, wenn die derzeit gestartete Anwendung eine Nicht-Musikanwendung ist, die Suche in der Audiozuordnungsinformationsliste gemäß den Bezeichnerinformationen der gestarteten Nicht-Musikanwendung auszuführen.

10. Endgerät nach Anspruch 8, wobei die Erzeugungseinheit ferner Folgendes umfasst:
ein Detektionsmodul, das konfiguriert ist zu detektieren, ob eine Entsprechung zwischen einer Musikanwendung und einer Audiodatei in der empfangenen Entsprechung, die zwischen einer Anwendung und einer Audiodatei besteht und durch den Anwender eingegeben wird, vorhanden ist;
ein Löschmodul, das konfiguriert ist, dann, wenn das Detektionsmodul detektiert, dass eine Entsprechung zwischen einer Musikanwendung und einer Audiodatei in der empfangenen Entsprechung, die zwischen einer Anwendung und einer Audiodatei besteht und durch den Anwender eingegeben wird, vorhanden ist, die Entsprechung zwischen einer Musikanwendung und einer Audiodatei aus der empfangenen Entsprechung, die zwischen einer Anwendung und einer Audiodatei besteht und durch den Anwender eingegeben wird, zu löschen; und
ein Erzeugungsmodul, das konfiguriert ist, die Audiozuordnungsinformationsliste gemäß der verbleibenden Entsprechung, die zwischen einer Anwendung und einer Audiodatei besteht und durch das Löschmodul erzeugt wird, zu erzeugen;
wobei das Erzeugungsmodul ferner konfiguriert ist, dann, wenn das Detektionsmodul detektiert, dass keine Entsprechung zwischen einer Musikanwendung und einer Audiodatei in der empfangenen Entsprechung, die zwischen einer Anwendung und einer Audiodatei besteht und durch den Anwender eingegeben wird, vorhanden ist, die Audiozuordnungsinformationsliste gemäß der empfangenen Entsprechung, die zwischen einer Anwendung und einer Audiodatei besteht und durch den Anwender eingegeben wird, zu erzeugen.

## Revendications

1. Procédé de démarrage d'une application musicale, comprenant l'étape consistant à :
quand une application non musicale est démarrée, réaliser (101) une recherche dans une liste d'information d'association audio selon une information d'identification de l'application non musicale démarrée,
la liste d'information d'association audio se rapportant à une liste d'une correspondance entre une application et un fichier audio ;
le procédé étant **caractérisé par** les étapes consistant à :
quand la liste d'information d'association audio comprend un fichier audio correspondant à l'application non musicale démarrée, démarrer une application musicale en arrière-plan pour lire le fichier audio correspondant à l'application non musicale démarrée ; et quand l'application musicale est démarrée en arrière-plan, afficher l'exécution de l'application non musicale comme étant démarrée en avant-plan ;
recevoir (401) une demande d'édition d'association audio envoyée par un utilisateur au moyen d'une clé prédéfinie ;
afficher (402) la liste d'information d'association audio ;
recevoir (403) une information d'association audio éditée entrée par l'utilisateur et remplacer l'information d'association audio par l'information d'association audio éditée.

2. Procédé selon la revendication 1, le procédé comprenant en outre, avant le démarrage d'une application non musicale, les étapes consistant à :
acquérir (201) une liste d'application d'un équipement d'utilisateur, la liste d'application comprenant un nom d'application et une information d'identification d'une application non musicale sur l'équipement d'utilisateur ;
acquérir (202) une liste de fichier audio de l'équipement d'utilisateur, la liste de fichier audio comprenant un nom de fichier et une information d'identification d'un fichier audio sur l'équipement d'utilisateur ; et
générer (203) la liste d'information d'association audio selon la liste d'application et la liste de fichier audio.

3. Procédé selon la revendication 1, le procédé comprenant en outre, avant le démarrage d'une application non musicale, l'étape consistant à :
recevoir une correspondance qui est entre une application et un fichier audio et qui est entrée par un utilisateur, et générer la liste d'information d'association audio.

4. Procédé selon l'une quelconque des revendications 1 à 3, le procédé comprenant en outre, après le démarrage de l'application non musicale et avant la réalisation d'une recherche dans une liste d'information d'association audio selon une information d'identification de l'application non musicale démarrée, les étapes consistant à :
détecter si l'application actuellement démarrée est une application non musicale ; et
réaliser la recherche dans la liste d'information d'association audio selon l'information d'identification de l'application non musicale démarrée quand l'application actuellement démarrée est une application non musicale.

5. Procédé selon la revendication 3, dans lequel la génération de la liste d'information d'association audio comprend les étapes consistant à :
détecter si une correspondance entre une application musicale et un fichier audio existe dans la correspondance reçue qui est entre une application et un fichier audio et qui est entrée par l'utilisateur ;
s'il est détecté qu'il existe une correspondance entre une application musicale et un fichier audio dans la correspondance reçue qui est entre une application et un fichier audio et qui est entrée par l'utilisateur, supprimer la correspondance entre une application musicale et un fichier audio de la correspondance reçue qui est entre une application et un fichier audio et qui est entrée par l'utilisateur, et générer la liste d'information d'association audio selon la correspondance restante entre une application et un fichier audio ; et
s'il n'existe aucune correspondance entre une application musicale et un fichier audio dans la correspondance reçue qui est entre une application et un fichier audio et qui est entrée par l'utilisateur, générer la liste d'information d'association audio selon la correspondance reçue qui est entre une application et un fichier audio et qui est entrée par l'utilisateur.

6. Terminal, comprenant :
une unité de recherche (51), configurée pour, quand une application non musicale est démarrée, réaliser une recherche dans une liste d'information d'association audio selon une information d'identification de l'application non musicale démarrée,
la liste d'information d'association audio se rapportant à une liste d'une correspondance entre une application et un fichier audio ; et
**caractérisé par** :
une unité de démarrage de lecture (52), configurée pour, quand l'unité de recherche détecte que la liste d'information d'association audio comprend un fichier audio correspondant à l'application non musicale démarrée, démarrer une application musicale en arrière-plan pour lire le fichier audio correspondant à l'application non musicale démarrée ; et quand l'application musicale est démarrée en arrière-plan, afficher l'exécution de l'application non musicale comme étant démarrée en avant-plan ;
le terminal étant en outre configuré pour :
recevoir (401) une demande d'édition d'association audio envoyée par un utilisateur au moyen d'une clé prédéfinie ;
afficher (402) la liste d'information d'association audio ;
recevoir (403) une information d'association audio éditée entrée par l'utilisateur et remplacer l'information d'association audio par l'information d'association audio éditée.

7. Terminal selon la revendication 6, comprenant en outre :
une unité d'acquisition, configurée pour acquérir une liste d'application d'un équipement d'utilisateur, la liste d'application comprenant un nom d'application et une information d'identification d'une application non musicale sur l'équipement d'utilisateur ;
l'unité d'acquisition étant en outre configurée pour acquérir une liste de fichier audio de l'équipement d'utilisateur, la liste de fichier audio comprenant un nom de fichier et une information d'identification d'un fichier audio sur l'équipement d'utilisateur ; et une unité de génération, configurée pour générer la liste d'information d'association audio selon la liste d'application et la liste de fichier audio qui sont acquises par l'unité d'acquisition.

8. Terminal selon la revendication 6, comprenant en outre :
une unité de réception, configurée pour recevoir une correspondance qui est entre une application et un fichier audio et qui est entrée par un utilisateur, et générer la liste d'information d'association audio.

9. Terminal selon l'une quelconque des revendications 6 à 8, comprenant en outre :
une unité de détection, configurée pour détecter si l'application actuellement démarrée est une application non musicale ;
l'unité de recherche étant configurée pour, quand l'application actuellement démarrée est une application non musicale, réaliser la recherche dans la liste d'information d'association audio selon l'information d'identification de l'application non musicale démarrée.

10. Terminal selon la revendication 8, dans lequel l'unité de génération comprend en outre :
un module de détection, configuré pour détecter si une correspondance entre une application musicale et un fichier audio existe dans la correspondance reçue qui est entre une application et un fichier audio et qui est entrée par l'utilisateur ;
un module de suppression, configuré pour : quand le module de détection détecte qu'il existe une correspondance entre une application musicale et un fichier audio dans la correspondance reçue qui est entre une application et un fichier audio et qui est entrée par l'utilisateur, supprimer la correspondance entre une application musicale et un fichier audio de la correspondance reçue qui est entre une application et un fichier audio et qui est entrée par l'utilisateur ; et
un module de génération, configuré pour générer la liste d'information d'association audio selon la correspondance restante qui est entre une application et un fichier audio et qui est générée par le module de suppression ;
le module de génération étant en outre configuré pour, quand le module de détection détecte qu'il n'existe aucune correspondance entre une application musicale et un fichier audio dans la correspondance reçue qui est entre une application et un fichier audio et qui est entrée par l'utilisateur, générer la liste d'information d'association audio selon la correspondance reçue qui est entre une application et un fichier audio et qui est entrée par l'utilisateur.
